Europäisches Patentamt

European Patent Office

Office européen des brevets

(19)

(11) Numéro de publication : **0 327 456 B1**

(12)
# FASCICULE DE BREVET EUROPEEN

(45) Date de publication du fascicule du brevet :
**28.04.93 Bulletin 93/17**

(51) Int. Cl.⁵ : **G08C 15/00,** B60R 16/02,
H04B 1/16

(21) Numéro de dépôt : **89400288.0**

(22) Date de dépôt : **02.02.89**

(54) **Système de mise en état opérationnel et en état de veille de boîtiers électroniques connectés à un canal de communication.**

(30) Priorité : **05.02.88 FR 8801330**

(43) Date de publication de la demande :
**09.08.89 Bulletin 89/32**

(45) Mention de la délivrance du brevet :
**28.04.93 Bulletin 93/17**

(84) Etats contractants désignés :
**DE ES GB IT SE**

(56) Documents cités :
**EP-A- 0 140 814**
**FR-A- 2 570 852**
**GB-A- 2 172 727**

(73) Titulaire : **SIEMENS AUTOMOTIVE S.A.**
**Avenue du Mirail - B.P. 1149**
**F-31036 Toulouse Cédex (FR)**

(72) Inventeur : **Pournain, Michel André**
**6 Rue du Bocage**
**31490 Leguevin (FR)**
Inventeur : **Loncle, Jean-Pierre**
**9 Rue de la Vallée du Lys**
**F-31600 Muret (FR)**
Inventeur : **Colombie, Francis**
**6 Impasse du Château de la Reynerie Appt. 224**
**F-31100 Toulouse (FR)**

(74) Mandataire : **Fuchs, Franz-Josef, Dr.-Ing. et al**
**Postfach 22 13 17**
**W-8000 München 22 (DE)**

## Description

L'invention concerne un système qui permet à des boîtiers électroniques capables de transmettre et/ou recevoir des messages par l'intermédiaire d'un canal de communication, de passer d'un état de veille à un état opérationnel et inversement par l'interprétation de messages spécifiques.

Dans un tel système de multiplexage, les boîtiers électroniques reliés entre eux par le canal de communication doivent généralement être connectés de façon autonome et permanente à une source électrique pour des raisons de sécurité et de disponibilité.

Une des contraintes majeures, lors du fonctionnement d'un tel système sur accumulateur, est d'obtenir une faible consommation électrique durant les périodes de repos. Tel est le cas dans le domaine des véhicules automobiles équipés d'un système de multiplexage où, à un certain nombre d'organes électriques tels que des actuateurs, transducteurs, capteurs, calculateurs ou autres, sont associés des boîtiers électroniques connectés à un canal de communication sur lequel transitent des messages d'actionnement, de mesure, de test, etc...

Or, certains de ces organes (centrale de surveillance, avertisseur, projecteurs, feux de détresse, etc...) doivent pouvoir être sollicités lorsque le contact est coupé sur le véhicule, tandis que d'autres peuvent rester non opérationnels. Il y a donc avantage à mettre les boîtiers électroniques non nécessaires à un moment donné en état de veille pour minimiser la consommation électrique du véhicule au repos.

Ceci pose le problème du "réveil" sélectif d'un certain nombre des boîtiers électroniques.

Le brevet U.S. 4.661.718 propose une solution consistant à prévoir une double voie de commande des organes qui doivent devenir opérationnels même lorsque le contact est coupé ; la première voie, constituée par le canal de communication et le boîtier électronique correspondant, est active lorsque le contact est mis et inactive dans le cas contraire ; la deuxième voie est active lorsque le contact est coupé et comprend des circuits à plus faible consommation électrique que la première voie de communication.

La solution décrite à ce brevet U.S. 4.661.718 permet effectivement de réduire la consommation électrique au repos, mais elle n'est cependant pas satisfaisante dans la mesure où elle fait appel à un câblage et des circuits spécifiques pour les organes concernés, alors que l'un des buts principaux d'un système du type précité est précisément de simplifier et réduire le câblage que nécessitent le nombre élevé d'organes électriques que l'on rencontre sur les véhicules automobiles modernes.

Cette solution va également à l'encontre de la standardisation, indispensable dans ce type de système, des boîtiers électroniques qui sont associés aux différents organes.

Enfin, corollaire de ce qui précède, cette solution n'offre pas aux concepteurs de véhicules la souplesse voulue car la configuration matérielle du système dépend des fonctions que doit remplir celui-ci.

L'invention vise à s'affranchir des inconvénients des solutions connues en fournissant un système dans lequel la mise en état opérationnel et en état de veille des boîtiers électroniques est effectuée par l'intermédiaire du canal de communication auquel ces boîtiers sont reliés.

A cet effet, l'invention a pour objet un système de mise en état opérationnel et en état de veille de boîtiers électroniques susceptibles de transmettre et ou recevoir des messages dans au moins un premier format par l'intermédiaire d'un canal de communication, caractérisé en ce que le système au moyen d'un desdits boîtiers à l'état opérationnel transmet sur ledit canal de communication, dans un second format distinct du premier, un message de mise en état opérationnel desdits boîtiers, et en ce que chaque boîtier comprend:

1°/ des premiers moyens d'interprétation des messages transmis dans ledit second format pour au moins commander la mise sous tension d'au moins une partie des circuits dudit boîtier en réponse à la reconnaissance dudit message de mise en état opérationnel,

2°/ des seconds moyens d'interprétation des messages transmis dans ledit premier format pour commander au moins la mise hors tension d'au moins une partie des circuits dudit boîtier en réponse à la reconnaissance d'un message de mise hors tension de cette partie des circuits transmis dans ledit premier format, lesdits seconds moyens d'interprétation faisant partie des circuits dont la mise sous tension est commandée par lesdits premiers moyens d'interprétation, et

3°/ un circuit pour alimenter lesdits premiers moyens d'interprétation indépendamment des messages transmis sur ledit canal de communication.

Ainsi, les boîtiers présentent deux états, à savoir un état opérationnel dans lequel un minimum de circuits électroniques des boîtiers sont sous tension et dans lequel les boîtiers sont susceptibles de transmettre et/ou recevoir des messages dans le premier format, et un état de veille dans lequel seuls sont gardés sous tension les circuits à faible consommation électrique qui ont pour but une mise sous tension d'autres circuits électroniques du boîtier électronique en réponse à la réception d'un message de mise en état opérationnel transmis dans le second format.

Selon une caractéristique, lesdits seconds moyens d'interprétation comprennent des moyens de temporisation déclenchés à leur mise sous tension pour commander la mise hors tension des circuits précédemment mis sous tension, en l'absence de réception dans un délai prédéterminé d'un message de confirmation de mise sous tension. Cette caractéristique permet, d'une part, de renforcer la sécurité de fonctionnement en confirmant par un message riche en informations (premier format) le message initial de mise sous tension transmis dans le second format relativement pauvre en informations, d'autre part, d'assurer le cas échéant un maintien sous tension sélectif des différents circuits électroniques des différents boîtiers électroniques.

Suivant une autre caractéristique chaque boîtier électronique comprend :

a) un premier sous-ensemble d'un premier type comportant au moins :
- une interface de communication avec ledit canal de transmission,
- un premier circuit d'interprétation des messages transmis dans ledit second format qui est connecté à ladite interface,
- ledit circuit d'alimentation pour alimenter ladite interface et le premier circuit d'interprétation indépendamment des messages transmis sur ledit canal,

b) au moins un second sous-ensemble d'un second type comportant au moins :
- un second circuit d'interprétation des messages transmis dans ledit premier format qui est connecté à ladite interface,
- un second circuit d'alimentation des circuits du second sous-ensemble,
- un circuit d'activation du second circuit d'alimentation piloté par le premier circuit d'interprétation pour mettre sous tension les circuits du second sous-ensemble en réponse à la réception par le premier circuit d'interprétation d'un message de mise en état opérationnel transmis dans ledit second format,
- un circuit de désactivation du second circuit d'alimentation piloté par le second circuit d'interprétation pour mettre hors tension les circuits du second sous-ensemble, soit en réponse à la réception par le second circuit d'interprétation d'un message de mise hors tension transmis dans ledit premier format, soit en l'absence de réception par le second circuit d'interprétation d'un message de confirmation de mise sous tension dans le délai prédéterminé, et
- au moins un bloc fonctionnel alimenté par le second circuit d'alimentation.

Suivant une forme de réalisation, au moins l'un desdits boîtiers électroniques comprend plusieurs sous-ensembles du second type hiérarchisés en plusieurs niveaux et chaque sous-ensemble est :
- susceptible d'être mis sous tension par son circuit d'activation commandé par au moins un circuit d'interprétation de niveau inférieur du premier ou du second type,

- susceptible d'être maintenu sélectivement sous tension à la réception par son circuit d'interprétation d'une commande ou d'un message de confirmation de mise sous tension transmis dans ledit premier format, et
- susceptible d'être mis hors tension, soit lorsque ladite commande ou ledit message de confirmation de mise sous tension n'est pas reçu par son circuit d'interprétation dans un délai prédéterminé T après sa mise sous tension, soit à la réception par ce même circuit d'interprétation d'une commande ou d'un message de mise hors tension transmise dans ledit premier format.

Suivant une autre forme de réalisation, au moins l'un des circuits d'interprétation de niveau x est connecté en parallèle à plusieurs circuits d'activation de sous-ensembles de niveaux y immédiatement supérieurs à x.

Suivant encore une autre forme de réalisation, au moins un boîtier électronique comporte un bus de communication interne auquel les circuits d'interprétation et l'interface de communication sont connectés et sur lequel transitent des messages transmis dans ledit premier format.

De préférence, lesdits circuits d'interprétation sont adaptés pour émettre des messages dans lesdits premier et second formats.

Suivant une forme particulière de réalisation dans laquelle le canal de communication est susceptible de prendre successivement un état de repos et au moins un état actif et les messages du premier format sont constitués d'au moins un mot défini par une succession d'états du canal, caractérisé en ce que le message de mise en état opérationnel des boîtiers dudit second format est constitué par la mise à un état actif dudit canal pendant un temps supérieur à la durée maximale d'une suite d'états actifs susceptibles d'être rencontrés lors de la transmission d'un mot de message dans ledit premier format et en ce que lesdits premiers moyens d'interprétation comprennent un circuit compteur de temps adapté pour détecter l'état dudit canal, générer une commande vers les circuits d'activation qui lui sont connectés lorsque le canal reste à l'état actif pendant un temps supérieur à une durée elle-même supérieure à ladite durée maximale et s'annuler lorsque le canal passe à l'état de repos avant la fin de ladite durée supérieure.

D'autres caractéristiques et avantages de l'invention résulteront de la description qui va suivre d'un mode de réalisation donné uniquement à titre d'exemple et illustré par les dessins annexés sur lesquels :

La figure 1 est un schéma bloc d'un système de mise en état opérationnel et en état de veille de boîtiers électroniques reliés à un canal de communication.

La figure 2 est un chronogramme illustrant le fonctionnement du système de la figure 1.

Les figures 3 et 4 sont des exemples de réalisation du circuit d'interprétation en mode pauvre du système de la figure 1.

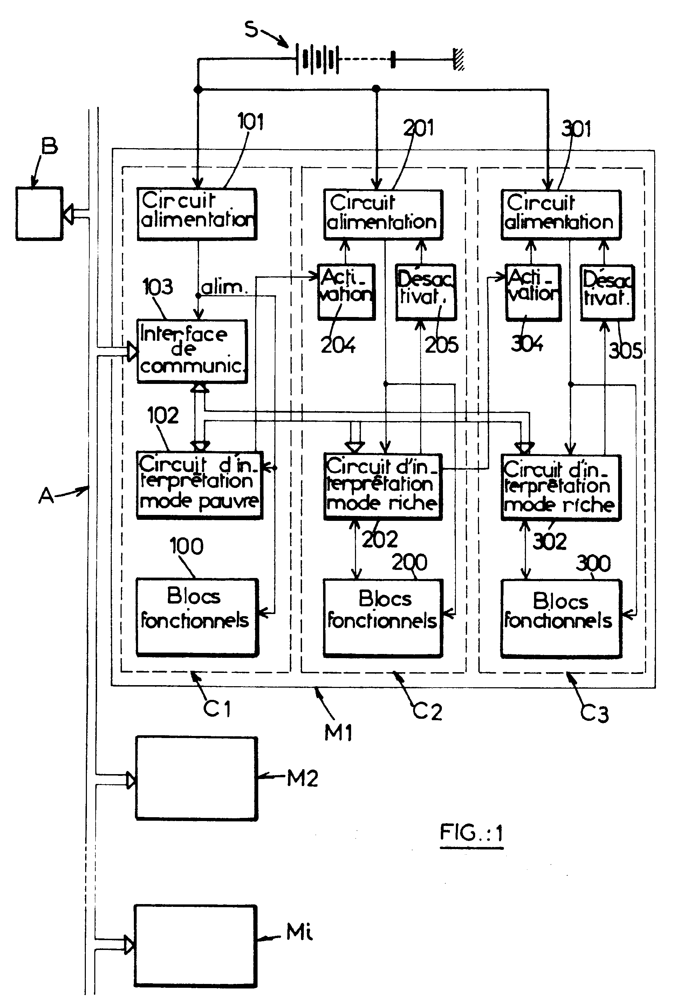

En se reportant à la figure 1, le système représenté comprend un canal de communication constitué d'un bus A relié à un certain nombre de boîtiers électroniques M1, M2.....Mi et à un boîtier électronique B. Le boîtier B et les boîtiers M1, M2.....Mi sont susceptibles de transmettre et/ou recevoir des messages sur le bus A.

Tous les boîtiers M ont la même architecture interne et, dans un but de clarté, seule celle du module M1 a été représentée en détails sur le dessin. Le boîtier B peut être un boîtier électronique du même type que M, mais qui sera le déclencheur du système décrit.

Chaque boîtier M est constitué d'un certain nombre de sous-ensembles C. Leur nombre n'est pas nécessairement le même dans tous les boîtiers M, mais chaque boîtier M comprend au moins un sous-ensemble C1 et un sous-ensemble C2. Dans l'exemple de la figure 1, le boîtier M1 comprend également un troisième sous-ensemble C3.

Ces sous-ensembles sont hiérarchisés en "n" niveaux suivant leur classe de fonctionnement :

C1 appartient à une classe de fonctionnement de niveau "1",

C2 à une classe de fonctionnement de niveau "2",

C3 à une classe de fonctionnement de niveau "3", etc...

Les sous-ensembles de niveaux "2" à "n" comprennent chacun un ou plusieurs blocs fonctionnels : C2 comprend des blocs fonctionnels 200, C3 des blocs fonctionnels 300, etc... Le sous-ensemble C1, dont le rôle sera explicité plus en détails dans la suite, peut ou non comprendre des blocs fonctionnels 100.

Les blocs fonctionnels 100, 200, 300 représentent des circuits consommateurs d'énergie électrique associés à des organes tels que des actuateurs, transducteurs, capteurs, etc... Tous les blocs fonctionnels des différents boîtiers présentant des caractéristiques similaires appartiennent à une classe de fonctionnement de même niveau : il peut s'agir de blocs fonctionnels ayant des consommations électriques voisines ou dont l'utilisation, non permanente, est simultanée ou synchronisée.

Chaque sous-ensemble C1, C2, C3.....Cn comprend également un circuit d'alimentation 101, 201, 301..... connecté à une source d'énergie électrique S et alimentant respectivement un circuit d'interprétation 102, 202, 302..... et les blocs fonctionnels correspondants 100, 200, 300.....

Le sous-ensemble C1 comporte une interface de communication 103 entre le bus A et le circuit d'interprétation 102. L'interface 103 est alimentée par le circuit d'alimentation 101. Suivant le mode d'interconnexion des entrées/sorties des différents circuits à l'intérieur des boîtiers M, les circuits d'interprétation 202, 302..... peuvent être connectés en parallèle à l'interface de communication 103 comme représenté à la figure 1, être connectés en cascade (sorties du circuit 102 connectées aux entrées du circuit 202, sorties du circuit 202 connectées aux entrées du circuit 302, etc...) ou être connectés de toute autre manière appropriée.

Les circuits d'alimentation 101, 201, 301..... sont connectés à une source d'énergie électrique tel qu'un accumulateur. Lorsque la source d'énergie électrique est active, le circuit d'alimentation 101 alimente en permanence l'interface 103, le circuit d'interprétation 102 et, le cas échéant, les blocs fonctionnels 100. Des moyens conventionnels tels qu'interrupteurs, relais ou autres (non représentés) peuvent éventuellement être prévus pour déconnecter la source d'énergie électrique S et interrompre l'alimentation des circuits précités. Néanmoins, il s'agit là d'un cas de figure exceptionnel et on admettra dans la suite que les circuits du sous-ensemble C1 sont alimentés en permanence, y compris lorsque les boîtiers sont mis en état de veille. C'est la raison pour laquelle ces circuits sont choisis de façon à présenter une très faible consommation électrique.

Aux circuits d'alimentation 201, 301..... des sous-ensembles de classes de fonctionnement de niveaux supérieurs sont associés des circuits d'activation 204, 304..... et de désactivation 205, 305.....

Chaque circuit d'activation est piloté par le circuit d'interprétation de niveau inférieur : le circuit d'interprétation 102 pilote le circuit d'activation 204, le circuit d'interprétation 202 pilote le circuit d'activation 304, etc... Chaque circuit de désactivation est piloté par le circuit d'interprétation de même niveau : le circuit d'interprétation 202 commande le circuit de désactivation 205, le circuit d'interprétation 302 commande le circuit de désactivation 305, etc... Suivant qu'il est activé ou désactivé, chacun des circuits d'alimentation 201, 301..... alimente ou non le circuit d'interprétation et les blocs fonctionnels du sous-ensemble C2, C3..... auquel il appartient.

L'activation (mise en état opérationnel) et la désactivation (mise en état de veille) des boîtiers électroniques M sont réalisées par la transmission de messages spécifiques sur le canal de communication ou bus A. Celui-ci possède au moins deux états différents dont l'un sera dit inactif et les autres actifs.

Dans le cadre du système décrit, les messages transmis sur le bus A peuvent se présenter sous au moins deux formats distincts : un premier format normal ou mode riche dans lequel les messages transmis ne peuvent être reconnus que par les circuits d'interprétation 202, 302..... de classe de fonctionnement de niveau supérieur à "1" et un second format ou mode pauvre dans lequel les messages plus pauvres en informations peuvent au moins être reconnus par les circuits d'interprétation 102 de la classe de fonctionnement de niveau "1".

Selon un mode préféré de réalisation, les premier et second formats se distinguent l'un de l'autre par la longueur des mots transmis dans chaque format. On sait en effet que les formes d'ondes présentes sur un bus de communication peuvent être définies par leur type de modulation (définition des différents états du bus A), la fréquence de modulation et la longueur maximale des mots transmis sans changement d'état. Cette longueur maximale combinée à la fréquence de modulation donne la fréquence minimale Fm pour laquelle on est certain d'avoir un changement d'état du bus de communication dans ce premier format.

A la fréquence de modulation qui est celle du système décrit, les messages transmis dans le premier format ou mode normal sont constitués d'un ou plusieurs mots qui ont une longueur ou durée maximale tmax. Cette durée tmax représente le temps maximal pendant lequel le bus A peut rester à des états actifs, sans passage à l'état inactif, lors de la transmission d'un message dans ce premier format.

Un message transmis dans le deuxième format ou mode "pauvre" se caractérise par le fait que sa fréquence de modulation est inférieure à la fréquence minimale Fm du mode normal. En d'autres termes, dans ce second format, le bus A est forcé à un état actif pendant une durée minimale tmin qui est plus longue que la durée tmax la plus longue d'un mot de message dans le premier format. Ce temps tmin supérieur à tmax doit être également suffisamment long pour permettre l'établissement des conditions de démarrage des boîtiers électroniques des sous-ensembles de classe supérieure à 1 et garantir une bonne immunité au bruit. Soit ts ce temps supplémentaire : on a

$$tmin = tmax + ts$$

Par conséquent le premier format normal ou mode riche permet, à haut débit, de transmettre de nombreux messages différents avec toutes les redondances nécessaires et suffisantes à une bonne fiabilité d'interprétation. L'interprétation des messages dans ce format nécessite des circuits électroniques 202, 302..... qui, bien que conventionnels et connus des spécialistes de la technique, sont complexes et gourmands en énergie électrique (micro-processeurs, circuits spécifiques ou autres).

Le second format ou mode pauvre ne permet de délivrer qu'un ou quelques messages différents, mais ceux-ci peuvent être facilement analysés par un circuit d'interprétation 102 très simple et donc peu gourmand en énergie.

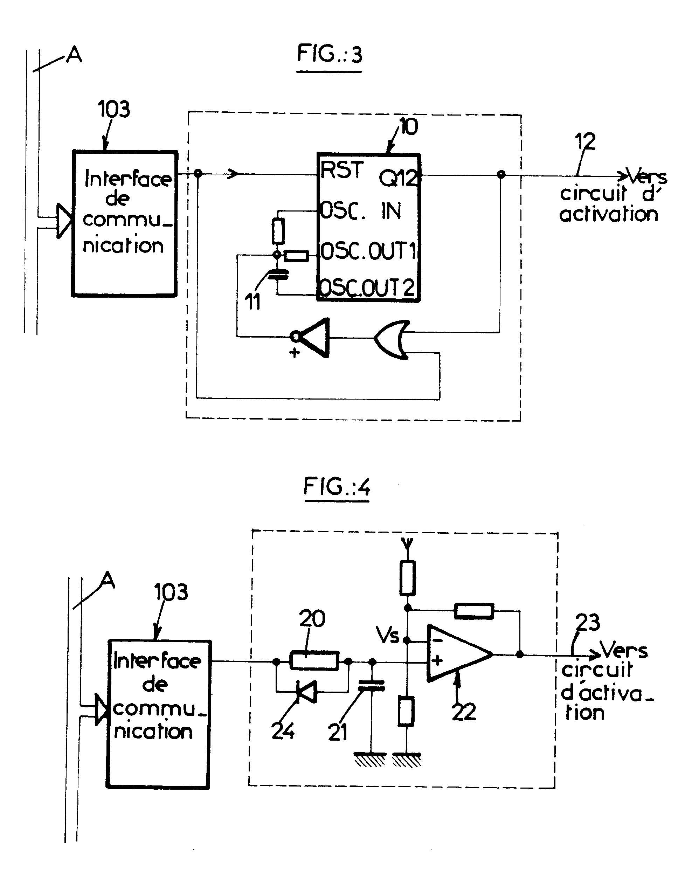

Comme représenté à la figure 3, il peut s'agir par exemple d'un compteur 10 qui est incrémenté quand le bus A est à un état actif et dont la capacité du condensateur associé 11 est choisie pour qu'il déborde lorsqu'un temps supérieur à tinit a été atteint (tmax<tinit<tmin) et émette sur sa sortie 12 une impulsion appliquée à un ou des circuits d'activation. Lorsque le temps tinit n'est pas atteint et lorsque le bus A repasse à l'état de repos, le contenu du compteur est réinitialisé.

On peut également utiliser (figure 4) un circuit RC à résistance 20 et condensateur 21 connecté à un comparateur à seuil 22 qui compare la tension aux bornes du circuit RC à une tension de seuil Vs. Lorsque le bus A est à l'état actif, le condensateur 21 se charge à travers la résistance 20 et, si la tension Vs est atteinte à ses bornes, le comparateur 22 émet sur sa sortie 23 une impulsion de sortie. Lorsque le bus A est à l'état inactif, le condensateur 21 se décharge à travers une diode 24 qui shunte la résistance 20.

On peut encore utiliser pour le circuit d'interprétation 102 un circuit logique à bascules, un relais temporisé à l'armement ou au déclenchement et d'une manière générale tout circuit électrique ou électronique compteur de temps capable de changer d'état lorsque le bus reste à un état actif pendant une durée supérieure à tinit et de revenir à son état initial lorsque le bus revient à l'état inactif quelle que soit la durée.

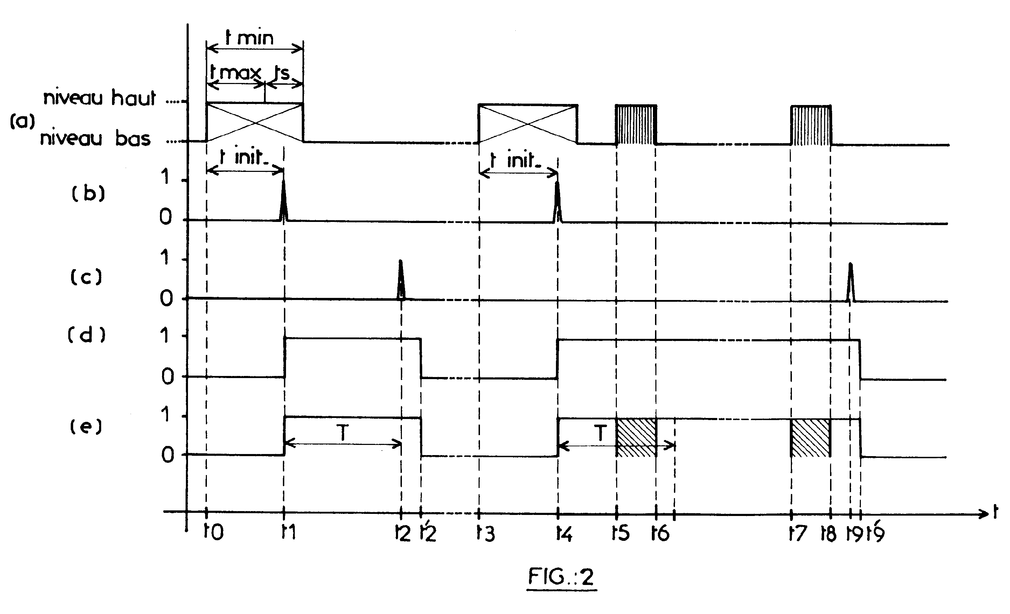

Le fonctionnement du système de la figure 1 sera maintenant décrit en se référant également au chronogramme de la figure 2, en supposant que tous les boîtiers M sont initialement à l'état de veille. Dans cet état, seuls les circuits 100, 102, et 103 du sous-ensemble C1 de chaque boîtier sont alimentés par leur circuit respectif 101. La consommation des boîtiers est alors très faible. On considèrera également que chaque boîtier M ne comporte que le sous-ensemble de classe C1 et un sous-ensemble de classe C2 dont le circuit d'activation 204 sera commandé par le circuit d'interprétation 102.

A l'instant to (figure 2a) un message de mise en état opérationnel est transmis dans le deuxième format sur le bus A, par exemple par le boîtier B. Dans le cas où le système est implanté dans un véhicule automobile, ce boîtier B peut être, par exemple, un boîtier électronique associé au contacteur de démarrage du véhicule. Toutefois, le message de mise en état opérationnel peut être également émis par l'un quelconque des boîtiers M qui serait à l'instant to à l'état opérationnel.

Au temps to (figure 2a), le bus A passe de l'état de repos (ex : niveau bas) à un état actif (ex : niveau haut) pendant une durée tmin qui est la somme de la durée tmax (correspondant à la longueur maximale d'un mot élémentaire de message riche sans changement d'état du bus A de communication) et d'un temps ts dont la durée est déterminée pour permettre la stabilisation de la mise sous tension du sous-ensemble de classe C2 et pour permettre à ces circuits de travailler.

A l'instant t1 tel que t1-to = tinit et tmax<tinit<tmin, les circuits d'interprétation 102 des boîtiers M détectent, par l'intermédiaire de leur circuit d'interface respectif 103, le message de mise en état opérationnel et émettent une commande vers les circuits d'activation 204 qui leur sont liés (t1, fig. 2b). Ceci a pour effet d'activer les circuits d'alimentation 201 correspondants (t1, fig. 2d). Les circuits des sous-ensembles de classe C2 sont alors mis sous tension (l'ensemble des boîtiers M passe ainsi de l'état de veille à l'état opérationnel) et, parmi ceux-ci, les circuits d'interprétation 202 (t1, fig. 2e) initialisent une temporisation. Cette temporisation a pour but de permettre aux circuits d'interprétation de mode riche 202 de vérifier, par l'intermédiaire de l'interface de communication, si un message de confirmation de mise sous tension, émis en mode riche et leur étant spécifiquement destiné, est présent sur le bus A avant la fin d'un délai prédéterminé T. Cette temporisation peut être réalisée par un monostable, par un compteur incrémenté par une horloge, par un comptage réalisé par logiciel si le circuit d'interprétation est un microprocesseur programmé ou par tout autre moyen conventionnel approprié.

A la fin du délai T (t2, fig. 2e), les circuits 202 qui n'ont pas détecté de message de confirmation de mise sous tension concernant le sous-ensemble auquel ils appartiennent, émettent une commande vers les circuits de désactivation 205 qui leur sont liés (t2, fig. 2c). Les alimentations 201 correspondantes sont mises hors tension (t'2, fig. 2d) et les sous-ensembles de classe C2 leur correspondant sont mis hors tension (t'2, fig. 2e).

Si au contraire, dans les limites de ce délai T, un ou plusieurs des circuits d'interprétation 202 détectent, par l'intermédiaire de l'interface de communication, un message de confirmation de mise sous tension émis en mode riche et leur étant spécifiquement destiné, alors la temporisation interne à ces circuits 202 est désactivée et le sous-ensemble correspondant restera sous tension. C'est cette situation qui est décrite entre les temps t3 et t6 de la figure 2. Comme précédemment, on retrouve au temps t4 l'initialisation de la temporisation (procédure commune à tous les circuits 202 du système), mais entre t5 et t6 un des messages riches présents sur le bus A est détecté par un des circuits d'interprétation 202 comme un message de confirmation de mise sous tension lui étant destiné et alors la temporisation de ce circuit est désactivée (t6, fig. 2e). L'alimentation 201 correspondante n'est pas désactivée et le sous-ensemble de classe C2 correspondant reste sous tension et donc opérationnel (t>6).

La mise hors tension d'un ou de plusieurs sous-ensembles alors sous tension se fera par l'envoi sur le bus A d'un message riche spécifique de mise hors tension. Cette situation est décrite entre les temps t7 et t9 de la figure 2. Entre les temps t7 et t8 un message riche est émis sur le bus A (t7/t8, fig. 2a). Si ce message est reconnu par un circuit d'interprétation 202 comme un message de mise hors tension du sous-ensemble auquel il appartient, ce circuit d'interprétation 202 émet une commande vers le circuit de désactivation 205 (t9, fig. 2c). Le circuit d'alimentation correspondant est alors désactivé (t'9, fig. 2d) et les circuits du sous-ensemble correspondant, et donc le circuit d'interprétation 202, sont mis hors tension (t'9, fig. 2e).

Si un ou plusieurs boîtiers électroniques M comportent plusieurs sous-ensembles Cx de niveaux x supérieurs à 1, le circuit d'interprétation 102 du sous-ensemble C1 peut être connecté en parallèle à plusieurs circuits d'activation x04 (x>1) qui assureront la mise sous tension des sous-ensembles de classe Cx correspondants par les circuits d'alimentation x01 lors de la reconnaissance d'un message de mise en état opérationnel émis en mode pauvre. Chacun des circuits d'interprétation x02 associés initialisera une temporisation pendant laquelle il surveillera l'arrivée d'un message spécifique de confirmation de mise sous tension émis en mode riche sans la présence duquel, avant la fin du délai T, une commande sera émise vers le circuit de désactivation correspondant x05. Par la suite, la mise hors tension des sous-ensembles alors sous tension d'un boîtier M se fera, soit par l'envoi d'un message spécifique de mise hors tension émis en mode riche sur le bus A par l'un quelconque des autres boîtiers électroniques alors dans l'état opérationnel, soit par un message spécifique émis, sur le bus interne de communication du boîtier M comportant le ou les sous-ensembles à mettre hors tension, par l'un quelconque des sous-ensembles alors sous tension de ce boîtier M.

En variante, une liaison ou des liaisons câblées peuvent être prévues entre les sous-ensembles à l'intérieur d'un boîtier M pour assurer les commandes de mise hors tension et de confirmation de mise sous tension, par exemple entre les circuits d'interprétation 202 et 302.

Une autre variante peut être envisagée : dans un ou plusieurs boîtiers M, un ou plusieurs circuits d'interprétation y02 (y>1) peuvent être connectés à un ou plusieurs circuits d'activation z04 (z>1). Dans ces différentes architectures, les processus de confirmation de mise sous tension et de mise hors tension restent les mêmes que précédemment.

Enfin il peut être aussi envisagé que le circuit d'interprétation d'un sous-ensemble d'une classe donnée décide lui-même de la mise hors tension du sous-ensemble auquel il appartient (par exemple lorsqu'il a terminé une tache qui lui était demandée).

Le système décrit peut, entre autres, être appliqué à des véhicules automobiles dans le but de limiter la consommation électrique des boîtiers électroniques associés à divers organes lorsque le véhicule n'est pas utilisé et que donc seule la batterie fournit de l'énergie. Le système permet alors de maintenir en état de fonctionnement certains équipements tels que, par exemple, des dispositifs d'antivol ou de télécommande d'ouverture et de fermeture des portes du véhicule (ces équipements étant contrôlés soit par des blocs fonctionnels 100 des sous-ensembles C1 de classe de fonctionnement de niveau "1", soit par des boîtiers dont au moins une classe de niveau supérieur à 1 est sous tension). Le système offre également la possibilité de mettre sous tension les sous-ensembles associés à certains organes (avertisseur, projecteurs, feux de détresse, etc...) et de les commander par l'émission des messages appropriés.

De plus, le système permet, pendant le fonctionnement du véhicule, de maintenir en état de veille des sous-ensembles ou boîtiers associés à des dispositifs qui sont peu employés en utilisation normale, par exemple des dispositifs d'intercommunication du véhicule avec l'extérieur. Il en résulte là encore une moindre consommation électrique à bord du véhicule, ainsi qu'une longévité accrue des composants des circuits électroniques concernés.

Le système décrit peut être utilisé dans d'autres domaines que les véhicules automobiles, par exemple celui des applications domestiques des techniques informatiques. C'est ainsi qu'un tel système permet de commander à distance la mise en état opérationnel et en état de veille, par l'intermédiaire d'une ligne téléphonique et d'un modem, d'un microordinateur de gestion domestique pilotant des organes tels qu'un appareil de chauffage, de ventilation, d'alarme, etc... De même, le système décrit peut être utilisé à l'intérieur d'un bâtiment pour mettre en état de veille et en état opérationnel des boîtiers électroniques associés à ces organes et pilotés par le microordinateur.

Il va de soi que les modes de réalisation décrits ne sont que des exemples et l'on pourrait les modifier, notamment par substitution d'équivalents techniques, sans sortir pour cela du cadre de l'invention.

## Revendications

1. Système de mise en état opérationnel et en état de veille des boîtiers électroniques (B, Mi) susceptibles de transmettre et ou recevoir des messages dans au moins un premier format par l'intermédiaire d'un canal de communication, caractérisé en ce que le système au moyen d'un desdits boîtiers à l'état opérationnel transmet sur ledit canal de communication (A), dans un second format distinct du premier, un message de mise en état opérationnel desdits boîtiers (Mi), et en ce que chaque boîtier (Mi) comprend :
   - des premiers moyens (102) d'interprétation des messages transmis dans ledit second format pour au moins commander la mise sous tension d'au moins une partie (200, 202 ; 300, 302) des circuits dudit boîtier en réponse à la reconnaissance dudit message de mise en état opérationnel,
   - des seconds moyens (202 ; 302) d'interprétation des messages transmis dans ledit premier format pour commander au moins la mise hors tension d'au moins une partie (200, 202 ; 300, 302) des circuits dudit boîtier en réponse à la reconnaissance d'un message de mise hors tension de cette partie des circuits transmis dans ledit premier format, lesdits seconds moyens d'interprétation faisant partie des circuits dont la mise sous tension est commandée par lesdits premiers moyens d'interprétation, et
   - un circuit (101) pour alimenter lesdits premiers moyens d'interprétation (102) indépendamment des messages transmis sur ledit canal de communication (A).

2. Système selon la revendication 1, caractérisé en ce que lesdits seconds moyens d'interprétation (202, 302) comprennent des moyens de temporisation déclenchés à leur mise sous tension pour commander la mise hors tension des circuits (200, 202 ; 300, 302) précédemment mis sous tension, en l'absence de réception dans un délai prédéterminé d'un message de confirmation de mise sous tension.

3. Système selon l'une quelconque des revendications 1 et 2, caractérisée en ce que chaque boîtier électronique (M) comprend :
   a) un premier sous-ensemble (C1) d'un premier type comportant au moins :
      - une interface (103) de communication avec ledit canal de transmission (A),
      - un premier circuit d'interprétation (102) des messages transmis dans ledit second format qui est connecté à ladite interface (103),
      - ledit circuit d'alimentation (101) pour alimenter ladite interface (103) et le premier circuit d'interprétation (102) indépendamment des messages transmis sur ledit canal (A),
   b) au moins un second sous-ensemble (C2) d'un second type comportant au moins :
      - un second circuit d'interprétation (202) des messages transmis dans ledit premier format qui est connecté à ladite interface (103),
      - un second circuit (202) d'alimentation des circuits (200, 202) du second sous-ensemble,
      - un circuit (204) d'activation du second circuit d'alimentation (201) piloté par le premier circuit d'interprétation (102) pour mettre sous tension les circuits (200) du second sous-ensemble en réponse à la réception par le premier circuit d'interprétation d'un message de mise en état opérationnel transmis dans ledit second format,

- un circuit (205) de désactivation du second circuit d'alimentation piloté par le second circuit d'interprétation (202) pour mettre hors tension les circuits (200, 202) du second sous-ensemble (C2), soit en réponse à la réception par le second circuit d'interprétation (202) d'un message de mise hors tension transmis dans ledit premier format, soit en l'absence de réception par le second circuit d'interprétation (202) d'un message de confirmation de mise sous tension dans ledit délai prédéterminé, et
- au moins un bloc fonctionnel (200) alimenté par le second circuit d'alimentation (201).

4. Système selon la revendication 3, caractérisé en ce qu'au moins l'un desdits boîtiers électroniques comprend plusieurs sous-ensembles (C2, C3....) du second type hiérarchisés en plusieurs niveaux (x) et que chaque sous-ensemble (Cx) est

- susceptible d'être mis sous tension par son circuit d'activation (x04) commandé par au moins un circuit d'interprétation (y02) de niveau inférieur (Cy) du premier ou du second type,
- susceptible d'être maintenu sélectivement sous tension à la réception par son circuit d'interprétation (x02) d'une commande ou d'un message de confirmation de mise sous tension transmis dans ledit premier format, et
- susceptible d'être mis hors tension, soit lorsque ladite commande ou ledit message de conformation de mise sous tension n'est pas reçu par son circuit d'interprétation (x02) dans un délai prédéterminé T après sa mise sous tension, soit à la réception par ce même circuit d'interprétation (x02) d'une commande ou d'un message de mise hors tension transmise dans ledit premier format.

5. Système selon les revendications 1 à 4, caractérisé en ce qu'au moins l'un des circuits d'interprétation (x02) de niveau x est connecté en parallèle à plusieurs circuits d'activation (y04) de sous-ensembles (Cy) de niveaux y immédiatement supérieurs à x.

6. Système selon les revendications 1 à 5, caractérisé en ce qu'au moins un boîtier électronique (M) comporte un bus de communication interne auquel les circuits d'interprétation (x02) et l'interface de communication (103) sont connectés et sur lequel transitent des messages transmis dans ledit premier format.

7. Système selon les revendications 1 à 6, caractérisé en ce que lesdits circuits d'interprétation (x02) sont adaptés pour émettre des messages dans lesdits premier et second formats.

8. Système selon l'une quelconque des revendications 1 à 7, dans lequel le canal de communication est susceptible de prendre successivement un état de repos et au moins un état actif et les messages du premier format sont constitués d'au moins un mot défini par une succession d'états du canal, caractérisé en ce que le message de mise en état opérationnel des boîtiers dudit second format est constitué par la mise à un état actif dudit canal pendant un temps supérieur à la durée maximale (tmax) d'une suite d'états actifs susceptibles d'être rencontrés lors de la transmission d'un mot de message dans ledit premier format et en ce que lesdits premiers moyens d'interprétation (102) comprennent un circuit compteur de temps adapté pour détecter l'état dudit canal, générer une commande vers les circuits d'activation qui lui sont connectés lorsque le canal reste à l'état actif pendant un temps supérieur à une durée (tinit) elle-même supérieure à ladite durée maximale (tmax) et s'annuler lorsque le canal passe à l'état de repos avant la fin de ladite durée supérieure (tinit).

**Patentansprüche**

1. System zum Versetzen von elektronischen Schaltungen (B, Mi), die Nachrichten in mindestens einem ersten Format über einen Übertragungskanal übertragen und/oder empfangen können, in den Betriebszustand und Standbyzustand, dadurch gekennzeichnet, daß das System, mittels einer der Schaltungen im Betriebszustand, eine Nachricht zum Versetzen der Schaltungen (Mi) in den Betriebszustand über den Übertragungskanal (A) in einem vom ersten Format verchiedenen zweiten Format überträgt, und daß jede Schaltung (Mi) aufweist:

- erste Mittel (102) zur Interpretation der im zweiten Format übertragenen Nachrichten, um zumindest das Anlegen der Spannung an mindestens einen Teil (200, 202; 300, 302) der Kreise dieser Schaltung bei Erkennen der Nachricht zum Versetzen in den Betriebszustand zu steuern,
- zweite Mittel (202; 302) zur Interpretation der im ersten Format übertragenen Nachrichten, um mindestens das Abschalten der Spannung an mindestens einem Teil (200, 202; 300, 302) der Kreise dieser Schaltung bei Erkennen einer im ersten Format übertragenen Nachricht zur Spannungsabschaltung dieses Teils der Kreise zu steuern, wobei die zweiten Interpretationsmittel einen Teil der Kreise bilden, bei dem das Anlegen der Spannung durch die ersten Interpretationsmittel gesteuert wird und

- einen Kreis (101) zum Speisen der ersten Interpretationsmittel (102) unabhängig von den in diesem Übertragungskanal (A) übertragenen Nachrichten.

2. System nach Anspruch 1, dadurch gekennzeichnet, daß die zweiten Interpretationsmittel (202, 302) Zeitsteuermittel aufweisen, die durch das Anlegen von Spannung getriggert werden, um die vorher unter Spannung gesetzten Kreise (200, 202; 300, 302) spannungslos zu machen, wenn nicht innerhalb einer vorgegebenen Zeitspanne eine Nachricht zur Bestätigung des Unterspannungssetzens empfangen wird.

3. System nach einem der Ansprüche 1 und 2, dadurch gekennzeichnet, daß jede elektronische Schaltung (M) aufweist:

a) ein erstes Modul (C1) eines ersten Typs mit mindestens:
- einer Schnittstelle (103) zur Kommunikation mit dem Übertragungskanal (A),
- einem ersten Interpretationskreis (102) zur Interpretation der im zweiten Format übertragenen Nachrichten, der mit der Schnittstelle (103) verbunden ist,
- dem Speisekreis (101) zum Speisen der Schnittstelle (103) und des ersten Interpretationskreises (102) unabhängig von über den Übertragungskanal (A) übertragenen Nachrichten,

b) mindestens ein zweites Modul (C2) eines zweiten Typs mit mindestens:
- einem zweiten Interpretationskreis (202) zur Interpretation der im ersten Format übertragenen Nachrichten, der mit der Schnittstelle (103) verbunden ist,
- einem zweiten Speisekreis (201) zum Speisen der Kreise (200, 202) des zweiten Moduls,
- einem Erregerkreis (204) zum Erregen des zweiten Speisekreises (201), der von dem ersten Interpretationskreis (102) vorgesteuert wird, um an die Kreise (200) des zweiten Moduls Spannung anzulegen, wenn der erste Interpretationskreis eine im zweiten Format übertragene Nachricht zum Versetzen in den Betriebszustand empfängt,
- einem Entregerkreis (205) zum Entregen des zweiten Speisekreises, der von dem zweiten Interpretationskreis (202) vorgesteuert wird, um die Kreise (200, 202) des zweiten Moduls (C2) spannungslos zu machen, wenn entweder der zweite Interpretationskreis (202) eine im ersten Format übertragene Nachricht zum Spannungsabschalten empfingt oder der zweite Interpretationskreis (202) innerhalb der vorgegebenen Zeitspanne keine Bestätigungsnachricht zum Bestätigen der Spannungsanlegung empfängt und
- mindestens einem Funktionsblock (200), der von dem zweiten Speisekreis (201) gespeist wird.

4. System nach Anspruch 3, dadurch gekennzeichnet, daß mindestens eine der elektronischen Schaltungen mehrere Module (C2, C3 ...) des zweiten Typs aufweist, die hierarchisch in mehreren Niveaus (x) geordnet sind, und daß jedes Modul (Cx) so ausgebildet ist,
- daß an es durch seinen Erregerkreis (x04) unter Steuerung mindestens eines Interpretationskreises (y02) kleineren Niveaus (Cy) des ersten oder zweiten Typs Spannung angelegt wird,
- daß es wahlweise unter Spannung gehalten wird, wenn sein Interpretationskreis (x02) einen im ersten Format übertragenen Steuerbefehl bzw. eine Nachricht zum Bestätigen der Spannungsanlegung erhält, und
- daß es spannungslos gemacht wird, wenn entweder der Steuerbefehl bzw. die Nachricht zum Bestätigen der Spannungsanlegung von seinem Interpretationskreis (x02) innerhalb einer vorgegebenen Zeitspanne (T) nach Anlegen der Spannung nicht empfangen wird oder wenn der gleiche Interpretationskreis (x02) einen im ersten Format übertragenen Steuerbefehl bzw. eine Nachricht zum Abschalten der Spannung empfängt.

5. System nach einem der Ansprüche 1 bis 4, dadurch gekennzeichnet, daß mindestens einer der Interpretationskreise (x02) des Niveaus x zu mehreren Erregerkreisen (y04) der Module (Cy) der unmittelbar über x liegenden Niveaus y parallel geschaltet ist.

6. System nach einem der Ansprüche 1 bis 5, dadurch gekennzeichnet, daß mindestens eine elektronische Schaltung (M) einen internen Datenbus aufweist, mit dem die Interpretationskreise (x02) und die Kommunikations-Schnittstelle (103) verbunden sind und über den die im ersten Format übertragenen Nachrichten laufen.

7. System nach einem der Ansprüche 1 bis 6, dadurch gekennzeichnet, daß die Interpretationskreise (x02) so ausgebildet sind, daß sie Nachrichten im ersten und zweiten Format abgeben können.

8. System nach einem der Ansprüche 1 bis 7, bei dem der Übertragungskanal in der Lage ist, nacheinander einen Ruhezustand und mindestens einen aktiven Zustand einzunehmen, und die Nachrichten des ersten Formats von mindestens einem Wort gebildet wird, das durch eine Aufeinanderfolge von Zuständen des Übertragungskanals definiert wird, dadurch gekennzeichnet, daß die Nachricht zum Versetzen der Schaltungen in den Betriebszustand des zweiten Formates dadurch gebildet wird, daß der Übertragungskanal während einer Zeitdauer in einen aktiven Zustand versetzt wird, die größer ist als die maximale Dauer (tmax) einer Folge von aktiven Zuständen, die während der Übertragung eines Wortes einer Nachricht im ersten Format anzutreffen sind, und daß die ersten Interpretationsmittel (102) einen Zeitzählkreis aufweisen, der so ausgebildet ist, daß er den zustand des Übertragungskanals erfaßt, einen Steuerbefehl an die mit ihm verbundene Erregerkreise abgibt, wenn der Übertragungskanal während einer Zeitdauer im aktiven zustand verbleibt, die größer ist als eine Zeitspanne (tinit), die ihrerseits größer ist als die besagte maximale Zeitspanne (tmax), und daß er sich auf Null zurückstellt, wenn der Übertragungskanal vor dem Ende der besagten größeren Zeitspanne (tinit) in den Ruhezustand übergeht.

**Claims**

1. System for putting electronic units (B, Mi), capable of transmitting and/or receiving messages in at least a first format by means of a communications channel, into an operational state and into a standby state, characterized in that the system by means of one of the said units in the operational state transmits on the said communications channel (A), in a second format which is distinct from the first format, a message for putting the said units (Mi) into an operational state, and in that each unit (Mi) comprises
   - first means (102) for interpreting the messages transmitted in the said second format in order to at least command the switching on of at least a portion (200,202; 300,302) of the circuits of the said unit in response to the recognition of the said message for putting into the operational state,
   - second means (202; 302) for interpreting the messages transmitted in the said first format in order to command at least the switching off of at least a portion (200,202; 300, 302) of the circuits of the said unit in response to the recognition of a message for the switching off of this portion of the circuits transmitted in the said first format, the said second interpretation means being part of the circuits whose switching on is commanded by the said first interpretation means, and
   - a circuit (101) for supplying the said first interpretation means (102) independently from the messages transmitted on the said communications channel (A).

2. System according to Claim 1, characterized in that the said second interpretation means (202, 302) comprise means of timing started when they are switched on for commanding the switching off of the circuits (200, 202; 300, 302) previously switched on, in the absence of reception within a predetermined period of a message confirming the switching on.

3. System according to either of Claims 1 or 2, characterized in that each electronic unit (M) comprises:
   a) a first subassembly (C1) of a first type comprising at least:
      - a communications interface (103) with the said transmission channel (A),
      - a first circuit (102) for the interpretation of messages transmitted in the said second format which is connected to the said interface (103),
      - the said supply circuit (101) for supplying the said interface (103) and the first interpretation circuit (102) independently from the messages transmitted on the said channel (A),
   b) at least one second subassembly (C2) of a second type comprising at least:
      - a second circuit (202) for the interpretation of the messages transmitted in the said first format which is connected to the said interface (103),
      - a second supply circuit (201) for the circuits (200, 202) of the second subassembly,
      - a circuit (204) for actuating the second supply circuit (201) controlled by the first interpretation circuit (102) for switching on the circuits (200) of the second subassembly in response to the reception by the first interpretation circuit of a message for putting into the operational state transmitted in the said second format,
- a circuit (205) for de-actuating the second supply circuit controlled by the second interpretation circuit (202) in order to switch off the circuits (200, 202) of the second subassembly (C2), either in response to the reception by the second interpretation circuit (202) of a switch-off message transmitted in the said first format, or in the absence of reception by the second interpretation circuit (202) of a switch-on confirmation message within the said predetermined period, and
- at least one functional block (200) supplied by the second supply circuit (201).

4. System according to Claim 3, characterized in that at least one of the said electronic units comprises several subassemblies (C2, C3...) of the second type hierarchized into several levels (x) and in that each subassembly (Cx) is:
- capable of being switched on by its actuating circuit (x04) controlled by at least one interpretation circuit (y02) of lower level (Cy) of the first or of the second type,
- capable of being selectively maintained under power on reception by its interpretation circuit (x02) of a command or of a switch-on confirmation message transmitted in the said first format, and
- capable of being switched off, either when the said command or the said switch-on confirmation message has not been received by its interpretation circuit (x02) within a predetermined period T after its switching on, or on reception by this same interpretation circuit (x02) of a command or of a switch-off message transmitted in the said first format.

5. System according to Claims 1 to 4, characterized in that at least one of the interpretation circuits (x02) of level x is connected in parallel with several actuating circuits (y04) of subassemblies (Cy) of level y, immediately higher than x.

6. System according to claims 1 to 5, characterized in that at least one electronic unit (M) comprises an internal communications bus to which the interpretation circuits (x02) and the communications interface (103) are connected and on which the messages transmitted in the said first format flow.

7. System according to Claims 1 to 6, characterized in that the said interpretation circuits (x02) are adapted to transmit messages in the said first and second formats.

8. System according to any one of Claims 1 to 7, in which the communications channel is capable of successively assuming a state of rest and at least one active state and the messages of the first format are constituted from at least one word defined by a succession of channel states, characterized in that the message for the putting into the operational state of the units of the said second format is constituted by the putting into the active state of the said channel during a time longer than the maximum duration (tmax) of a series of active states likely to be encountered during the transmission of a message word in the said first format and in that the said first interpretation means (102) comprise a time metering circuit adapted for detecting the state of the said channel, generating a command to the actuating circuits which are connected to it when the channel remains in the active state for a time longer than a duration (tinit) which is itself longer than the said maximum duration (tmax) and cancelling out when the channel changes to the rest state before the end of the said longer duration (tinit).

FIG.:1

FIG.:2

EP 0 327 456 B1

## FIG.:3

## FIG.:4